(19) Europäisches Patentamt
European Patent Office
Office européen des brevets

(11) **EP 4 683 238 A1**

(12) **EUROPEAN PATENT APPLICATION**

(43) Date of publication:
**21.01.2026 Bulletin 2026/04**

(21) Application number: **24188590.4**

(22) Date of filing: **15.07.2024**

(51) International Patent Classification (IPC):
***H04B 7/06*** (2006.01)

(52) Cooperative Patent Classification (CPC):
**H04B 7/0617**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(71) Applicant: **Imec VZW**
**3001 Leuven (BE)**

(72) Inventors:
- **Chare, Christopher**
  **3001 Leuven (BE)**
- **Genoe, Jan**
  **3001 Leuven (BE)**

(74) Representative: **Patent Department IMEC**
**IMEC vzw**
**Patent Department**
**Kapeldreef 75**
**3001 Leuven (BE)**

(54) **PHASED ARRAY BEAMFORMING AND/OR BEAMSTEERING METHOD AND DEVICE**

(57) Phased array beamforming and/or beamsteering method and device, for forming a transmit beam at a predetermined frequency and focusing the transmit beam in the near field. The method comprises: applying first signals to first nodes of the columns of the driven set of transducers, the first signals having a first frequency and being at a first phase shift with respect to each other; applying second signals to second nodes of the rows of the driven set of transducers, the second signals having a second frequency and being at a second phase shift with respect to each other; generating an output signal for each transducer based on a multiplication of the respective first and second signals of the corresponding column and row. The first and second frequencies are fractions of the predetermined frequency, such that the output signal is at the predetermined frequency as a result of the multiplication.

FIG. 2

## Description

### Field of the disclosure

The present disclosure relates to a phased array beamforming and/or beamsteering method and a device making use thereof.

### Background art

Sanchez-Barbetty, M., & Jackson, R. W. (2008). "Architecture for Low Cost Electronically Steered Phased Arrays", IEEE MTT-S International Microwave Symposium Digest, discloses a series fed row-column beam steering architecture for the realization of a low cost electronically steered phased array. Series feeds are used for distributing the local oscillator (LO) and for collecting/distributing the intermediate frequency (IF). Using series feeds reduces the number of panel layers and thus reduces cost. The row/column beam steering approach avoids using a phase shifter with each radiating element and drastically reduces the number of phase shifters necessary. A small prototype array is presented to demonstrate the operation of the architecture.

Sanchez-Barbetty, M. (2011), "Low Cost Electronically Steered Phase Arrays for Weather Applications", Open Access Dissertations, discloses an Electronically Steered Phased Array as a versatile antenna used in radars applications. The focus of this research is on techniques that reduce the packaging and the backplane cost of large electronically steered arrays. These techniques are based on simplified signal distributions schemes, reduction of layers in the backplane and use of inexpensive materials. Two architectures designed based on these techniques, as well as a novel BGA active antenna package for dual polarized phased arrays are presented. The first architecture, called the series fed row-column architecture, focuses on the reduction of phase shifters and control signals used in the backplane of the array. The second architecture, called the parallel plate feed architecture, is based on a simplified scheme for distribution of the local oscillator signal.

### Summary of the disclosure

It is an aim of the present disclosure to provide a phased array beamforming and/or beamsteering method, and device making use thereof, with reduced design complexity for driving the elements of the array.

The aim is achieved with the subject-matter of the independent claims.

Preferred embodiments are subject of the dependent claims and are discussed herein.

As aspect of the present disclosure relates to a phased array beamforming method for forming a transmit beam at a predetermined frequency, F, and focusing the transmit beam in the near field of the phased array. The beamforming is performed by means of an array of transducers arranged in rows and columns, wherein at least a set of the transducers are continuously driven for forming said transmit beam. With "continuously driven" is meant that during operation of the beamforming, the drive signals are applied continuously to all transducers of the driven set and not for example alternatingly or successively. The method comprises: applying first signals to first nodes of the columns of the driven set of transducers, the first signals having a first frequency, $f_1$, and being at a first phase shift with respect to each other; applying second signals to second nodes of the rows of the driven set of transducers, the second signals having a second frequency, $f_2$, and being at a second phase shift with respect to each other; and generating an output signal for each of the driven set of transducers based on a multiplication of the respective first and second signals of the corresponding column and row. The first and second frequencies are fractions, a and b, of the predetermined frequency of the transmit beam, with the following conditions: $f_1 = a * F$; $f_2 = b * F$; and $a + b = 1$. As a result, due to the multiplication, output signals for the transducers are achieved at the predetermined frequency.

In particular, the multiplied signal contains a component at the predetermined frequency, caused by the sum of the frequencies $f_1 + f_2$. The multiplication may generate also other components, such as a difference component at a frequency $f_1 - f_2$ and/or harmonics. These may be filtered out if necessary, for example by means of appropriate filters, and/or the transducers could be non-responsive to these other components. The inventors have surprisingly found that by generating the output signals for the transducers in this way, i.e. based on a multiplication of two signals which are fractions of the desired operating frequency, the complexity of determining or calculating the phase shifts for the first and second base signals may be reduced, as discussed in detail further herein.

In embodiments, the first and second frequencies may be half the predetermined frequency. This means that $f_1 = f_2 = F/2$ or that $a = b = \frac{1}{2}$. This may have one or more of the following advantages. Due to the first and second signals having the same frequency (F/2), they may be generated from the same oscillator. Further, due to the multiplication, the difference component $f_1 - f_2$ is cancelled out, possibly only leaving a DC component which can be easily removed from the output signals. Still further, due to the fact that basically or substantially only the desired frequency component (F) is generated, the dynamic power loss may be reduced or minimized.

In embodiments, the first and second phase shifts may be determined by a non-linear convex optimization method. Preferably, the first and second phase shifts may be determined by quadratic programming, for example as discussed in detail further herein.

In embodiments, all transducers of the array may be driven.

In embodiments, at least some transducers the array may not be driven, or driven at a lower amplitude, to suppress undesired components of the transmit beam.

In embodiments, the array may be planar.

In embodiments, the array may also be concave. It has been found the phase generation methods as disclosed herein work as long as the polynomial order of the desired phase map is less than 2 (quadratic).

In embodiments, the transmit beam may be an acoustic beam, for example an ultrasound beam, or an electromagnetic beam, preferably wherein the transmit beam is focused in the near-field.

An aspect of the present disclosure relates to a phased array beamsteering method, wherein a transmit beam is formed by the beamforming method as discussed herein and wherein the transmit beam is steered by modifying the first and/or second phase shifts.

An aspect of the present disclosure relates to a device comprising a phased array for emitting a transmit beam at a predetermined frequency, F, and focusing the transmit beam in the near field of the phased array. The phased array comprises an array of transducers arranged in rows and columns and circuitry for continuously driving at least a set of the transducers according to a phased array beamforming method, the circuitry comprising first components for applying first signals to first nodes of the columns of the driven set of transducers, the first signals having a first frequency, $f1$, and being at a first phase shift with respect to each other, second components for applying second signals to second nodes of the rows of the driven set of transducers, the second signals having a second frequency, $f2$, and being at a second phase shift with respect to each other, and multiplying mixers for generating an output signal for each of the driven set of transducers based on a multiplication of the respective first and second signals of the corresponding column and row. The first and second frequencies are fractions, $a$ and $b$, of the predetermined frequency of the transmit beam, with the following conditions: $f1 = a * F$; $f2 = b * F$; and $a + b = 1$. As a result, due to the multiplication, output signals for the transducers are achieved at the predetermined frequency.

In embodiments, the first and second frequencies may be half the predetermined frequency. This means that $f1 = f2 = F/2$ or that $a = b = \frac{1}{2}$.

In embodiments, the circuitry and components thereof may be provided for determining the phase shifts using the methods as disclosed herein.

In embodiments, the first and second phase shifts may be determined by a non-linear convex optimization method. Preferably, the first and second phase shifts may be determined by quadratic programming, for example as discussed in detail further herein.

In embodiments, the circuitry may comprise filters between the multiplying mixers and the transducers for removing undesired frequency components from the output signals, for example high pass filters or band pass filters.

In embodiments, the transducers may be non-responsive to one or more frequency components that are generated by the multiplying mixers.

In embodiments, all transducers of the array may be driven.

In embodiments, at least some transducers the array may not be driven, or driven at a lower amplitude, to suppress undesired components of the transmit beam.

In embodiments, the array may be planar.

In embodiments, the array may also be concave. It has been found the phase generation methods as disclosed herein work as long as the polynomial order of the desired phase map is less than 2 (quadratic).

In embodiments, the transmit beam may be an acoustic beam, for example an ultrasound beam, or an electromagnetic beam.

An aspect of the present disclosure relates to a phased array beamsteering device, wherein the circuitry is provided for steering the transmit beam by modifying the first and/or second phase shifts.

An aspect of the present disclosure relates to a beamforming and/or beamsteering device wherein the array is a multifrequency array, wherein each cell of the array comprises a first transducer for emitting a first transmit beam component at a first operating frequency and a second transducer for emitting a second transmit beam component at a second operating frequency.

### Brief description of the drawings

Embodiments of the present disclosure will be discussed in more detail below, with reference to the attached drawings.

Fig. 1 shows a schematic representation of the construction and operation of a traditional phased array for beamforming and/or beamsteering.

FIG. 2 shows an embodiment of a boundary controlled phased array beamforming device according to the present disclosure.

Fig. 3 shows (left) a typical representation of a standard Gilbert cell and (right) a modified Gilbert cell for dual-gate technologies, suitable for implementation in the architecture of Fig. 2.

Fig. 4 shows the formulation of a quadratic programming (QP) method to determine the input phases for a boundary controlled phased array according to the present disclosure.

Fig. 5 shows the result of a simulation of a 63 x 63 phased array at 250 kHz in air, boundary controlled according to the present disclosure.

Fig. 6 shows the result of a simulation of a 255 x 255 phased array at 15 MHz in water, boundary controlled according to the present disclosure.

Fig. 7 shows the result of a simulation of a 63 x 63 phased array at 250 kHz in air, boundary controlled according to the present disclosure, wherein the beam is steered by modifying the phases.

Fig. 8 shows the result of a simulation of a 63 x 63 phased array at 250 kHz in air, boundary controlled according to the present disclosure and apodized to suppress the emanation of side-lobes.

Figs. 9 and 10 it is shown by simulations how the phase error may increase when the focal height is decreased.

Fig. 11 shows further embodiments according to the present disclosure comprising a multifrequency array.

Fig. 12 shows a flow chart of a method of operating a boundary controlled phased array beamforming device according to the present disclosure.

## Description of embodiments

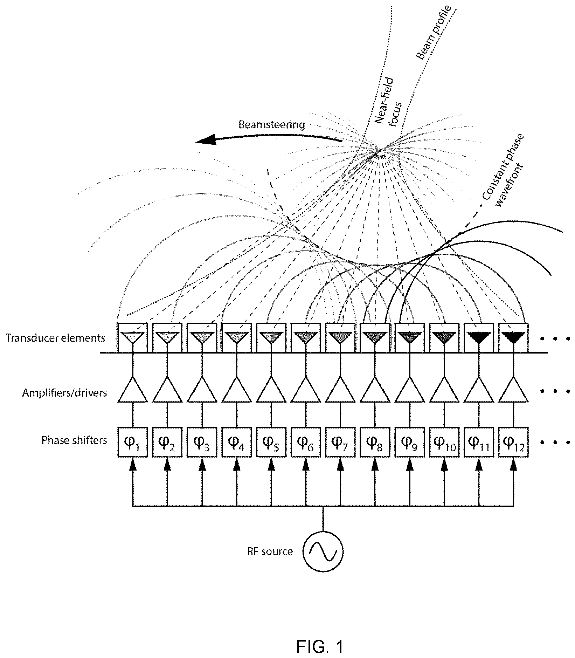

The present disclosure relates to electrical and electronic engineering - control systems and phased array design. Fig. 1 shows a schematic representation of the construction and operation of a traditional phased array for beamforming and/or beamsteering. The figure shows one row of a 2D phased array. Beamforming (and by consequence beamsteering) by means of a phased array typically comprises a fully connected active matrix of piezoelectric elements / transducer elements, each being driven by a (common) signal source (RF source) a dedicated phase shifter ($\varphi_1$, $\varphi_2$, $\varphi_3$, ...) and a dedicated amplifier/driver, to generate a constant phase wavefront that can be focused in the near field or in the far field. Beamsteering (arrow on the beam in Fig. 1) is achieved by a dynamic phased array, by dynamically modifying the phases by means of the phase shifters ($\varphi_1$, $\varphi_2$, $\varphi_3$, ...).

Fully connected arrays provide the most flexibility, as each individual element can be independently controlled in either amplitude or phase, allowing for complex multi-beamsteering. Creating the backplane control electronics for fully connected arrays within the context of RF phased array antennas is relatively trivial, as each element is quite large, which allows for the integration of ASIC/monolithically integrated electronic control circuits. However, as the element size becomes smaller, it becomes exponentially difficult to fit the necessary electronic components into the limited element area. This becomes especially relevant for phased arrays with small pitch distances, such as those incorporating MEMS and optical transduction elements.

Alternatively, passively driving each element from external sources as a fully connected array becomes problematic as the space taken by the signal routing becomes the limiting factor. Other passive solutions such as a row-column connected array are limited in practicality, as this essentially couples the signals among other elements, resulting in limitations of what the arrays can achieve.

Herein, solutions are proposed wherein control complexity may be reduced by use of a boundary controlled phased array, which means that a row/column beam forming/steering approach is used that avoids using a phase shifter with each radiating element and significantly reduces the number of phase shifters needed compared to a fully connected array. Design complexity for driving of each element of the phased array may be reduced as a result of externally fed passive phase generation. The determination of the optimal input boundary phases may be achieved via a non-linear convex optimization method.

The solutions proposed herein are designed for focusing the transmit beam that is generated by the boundary controlled phased array in the near field. The transmit beam may be an electromagnetic (EM) or an acoustic beam, for example an ultrasound beam.

For acoustic/ultrasound, the near field may be defined as follows. The sound field of the transducer array is divided into two zones, the near field and the far field. The near field is the region close to the transducer array where the sound pressure goes through a series of maximums and minimums, and it ends at the last on-axis maximum at a distance N from the face. Near field distance N represents the natural focus of the transducer array. The far field is the region beyond N where the sound pressure gradually drops to zero as the beam diameter expands and its energy dissipates. The near field distance N is a function of the transducer array's frequency and diameter D, and the sound velocity in the test medium, and may be generally defined as $N = D^2/4\lambda$.

For EM beams, the near field refers to places nearby the transducer array, or inside any polarizable media surrounding it, where the generation and emission of electromagnetic waves can be interfered with while the field lines remain electrically attached to the array, hence absorption of radiation in the near field by adjacent conducting objects detectably affects the loading on the signal generator (the transmitter). The electric and magnetic fields can exist independently of each other in the near field, and one type of field can be disproportionately larger than the other, in different subregions. In contrast, the far field is the region in which the field has settled into "normal" electromagnetic radiation. In this region, it is dominated by transverse electric or magnetic fields with electric dipole characteristics. In the far-field region of an antenna, radiated power decreases as the square of distance, and absorption of the radiation does not feed back to the transmitter. In the far-field region, each of the electric and magnetic parts of the EM field is "produced by" (or associated with) a change in the other part, and the ratio of electric and magnetic field intensities is simply the wave impedance in the medium. Generally, the near field is that part of the radiated field that is below distances shorter than the Fraunhofer distance $d_F$ from the transducer array of diameter D, which is given by $d_F = 2D^2/\lambda$.

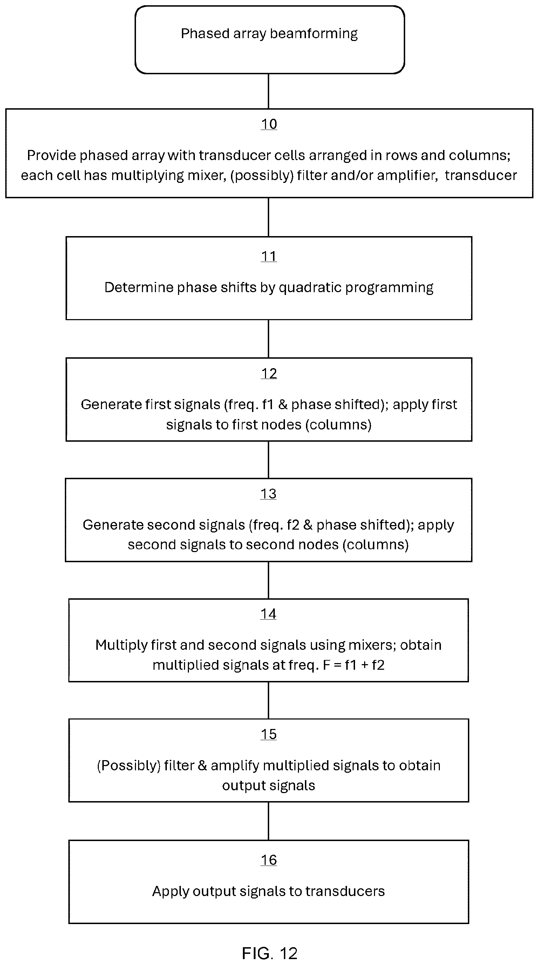

FIG. 12 shows an embodiment of a phased array beamforming method according to the present disclosure, comprising the following steps.

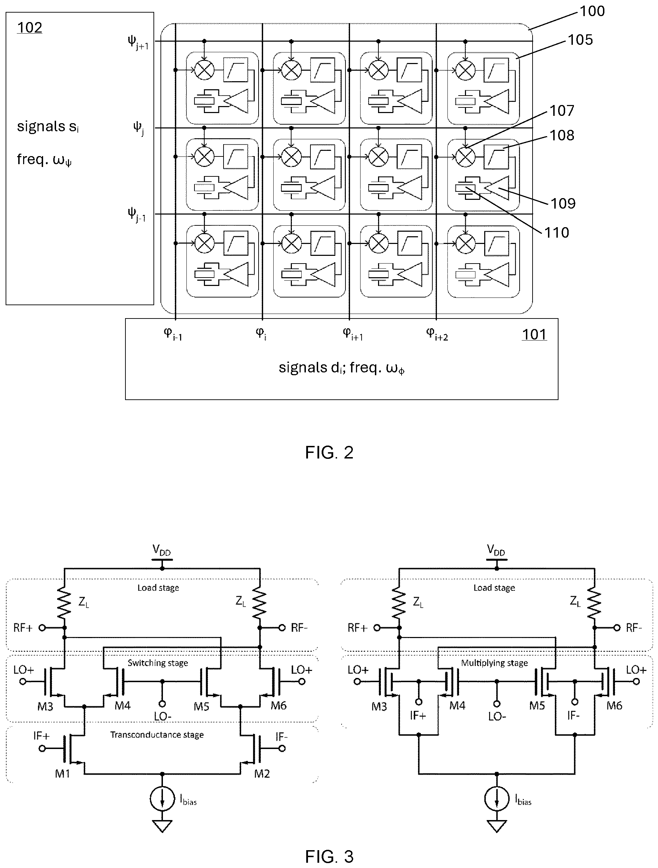

Step 10 comprises providing a phased array with transducer cells arranged in rows and columns, wherein each cell may have a multiplying mixer, (possibly) a filter and/or an amplifier, and a transducer, such as for example a boundary controlled phased array as shown in Fig. 2.

Step 11 comprises determining the phase shifts to be applied to the row/column signals, which may be done by quadratic programming as described herein.

Step 12 comprises generating first signals (having a first frequency f1 and the determined phase shifts) and applying the first signals to first nodes / column nodes of the phased array. Step 13 comprises generating second signals (having a second frequency f2 and the determined phase shifts) and applying the second signals to second nodes / row nodes of the phased array. The first and second frequencies are chosen such that f1 + f2 = F, the desired operating frequency for driving the transducers of the phased array.

Step 14 comprises multiplying the respective first and second signals, which may be done by multiplying mixers present in the cells of the phased array, and whereby multiplied signals are obtained that contain at least a component at the desired operating frequency F = f1 + f2.

Step 15 may comprise filtering and/or amplifying multiplied signals, for example by means of filters and/or amplifiers provided in the cells of the phased array, to obtain output signals suitable for driving the transducers. In embodiments, the transducers may also be made non-responsive to undesired components of the multiplied signals.

Step 16 comprises applying the output signals to the transducers of the phased array, thereby obtaining the desired transmit beam focused in the near field.

In embodiments of the present disclosure, a reduction in control complexity may be achieved by the fact that the phased output waveform desired for each element is generated through the use of multiplication, for example by multiplying mixers, of two base signals (the first and second signals) applied to each cell of the array. An embodiment of such a phased array device 100 is shown in FIG. 2. The base signals are at frequencies, $\omega_\phi$ and $\omega_\psi$, which are chosen such that the sum of the frequencies of the two base signals is equal to the desired operating frequency for driving the transducers 110. In this embodiment, the multiplication of the base signals is achieved by the multiplying mixers 107 in the respective cells 105 of the phased array 100. The mixers may be linear or non-linear and may be implemented as analog or digital components, placed at the junction of row and column signal inputs from the boundary of the array, as shown in FIG. 2. The figure thus shows a multiplicative mixer implementation with row and column phased input. A fully analog implementation is depicted here, but a digital implementation of a multiplicative mixer is possible as well. Each cell 105 or element of the array 100 comprises a transducer element 110 driven by a mixer 107 that mixes a row signal with a column signal, possibly a filter 108 such as a high pass filter or band pass filter, and possibly an amplifier/driver 109.

In a simple implementation, each element of the array may have a linear upconverting multiplicative mixer 107 which has two inputs, one from the corresponding row and the other from the corresponding column signal lines, and wherein each signal line is driven with a phased waveform at half the desired operating frequency of the array. The output of the mixer is then a phased waveform at the operating frequency, with the phase defined as the simple addition of the two input phases, i.e., $\phi_i + \psi_j$. An ideal mixer will output two waveforms with frequencies $\omega_\phi + \omega_\psi$ and $\omega_\phi - \omega_\psi$. Since all signal lines are of equal frequency, the second term cancels out, leaving only the $2\omega$ term. So by setting the frequency of both the row signals and the column signals at half the desired operating frequency, a drive signal at the operating signal is achieved and the unwanted component is cancelled out. In practice, nonidealities such as slight differences in the input frequencies means that low frequency components may arise, which may result in a low frequency second term. Further, an input phase dependent DC term may be caused that may have to be removed if required, for example by means of a filter. Thus, a filter 108 such as a high-pass filter may be desired (but not necessary) to remove unwanted components. The filter may for example be avoided in case of feeding the multiplied signal into a differential amplification stage, in place of a regular single input amplifier/buffer.

The output of the mixer/filter is then fed into an amplifier 109 to drive the transducer element 110, whether it be a MEMS device such as a transducer or RF antenna etc. It should be noted that an amplifier, again as with the filter, may not be strictly necessary, as such elements may for example be implemented in the mixer stage itself if feasible. But for elements that require large currents/power, such as ultrasonic transducers, it is recommended to include one as it is typically impractical for the mixer to deliver large currents at large voltages due to unwanted power losses from the mixer and input signal lines.

## Embodiments of mixer

In embodiments, an appropriate mixer for a multiplicative mixer implementation may be a (modified) Gilbert cell, as it is a balanced linear time-varying mixer. This mixer may be specially designed in technologies which allow for dual-gate control of transistors, such as dual-gate thin-film transistors (TFTs), which can be used in place of standard single gate transistor technologies. This results in the transistors of the transconductance stage being folded into the switching stage, which produces the same behavior of the transconductance stage by modulating the threshold voltages of the transistors within the switching stage. Fig. 3 (left) shows a typical representation of a standard Gilbert cell and (right) a modified Gilbert cell for dual-gate technologies, suitable for implementation in the architecture of Fig. 2.

An additional beneficial feature of note for this implementation is that the element amplitudes can also be controlled via the amplitudes of the row and column input signals. This is especially useful in applications which require amplitude modulation over the array, for example, apodization of array elements in ultrasound imaging, which may be used to reduce or suppress the emanation of side-lobes.

In other embodiments, a non-linear upconverting multiplicative mixer may be used (practically any other mixer than a Gilbert cell), in which case the output of the mixer will contain inter-modulation harmonics of the second-order and above. This may introduce components that have the incorrect phase when both the row and column frequencies are equal, i.e., such as $2\phi_i$ from the $2\omega_\phi$ second-order component. Instead, the row and column frequencies should be selected to add up to the nominal array frequency, and the high-pass filter should be replaced with a band-pass filter that selects for the desired harmonic with the correct output phase.

## Phase determination method

In the most basic case, the first and second phase shifts may be calculated on the basis that both the row and column phases represent a quadratic of some sort. Use of an optimizer is desired when the target array phase map is not exactly a quadratic, and this happens when the focal point is very close to the array, i.e. there will be some mixture of quadratic and linear phases.

Determination of the input boundary phases may therefore be efficiently performed via an optimization routine, based on the minimization of phase error between the desired and actual element phases as a result of the inputs. In particular, a non-linear convex optimization method may be used, for example quadratic programming (QP), to determine the input phases via an analytic decomposition of the array elements into matrix form amenable in the form of a QP problem. This does not rule out the usage of other optimization (general) schemes to determine the input phases, rather there is a significant trade-off in convergence time, accuracy, and repeatability of other solutions, so that the QP formulation is preferred.

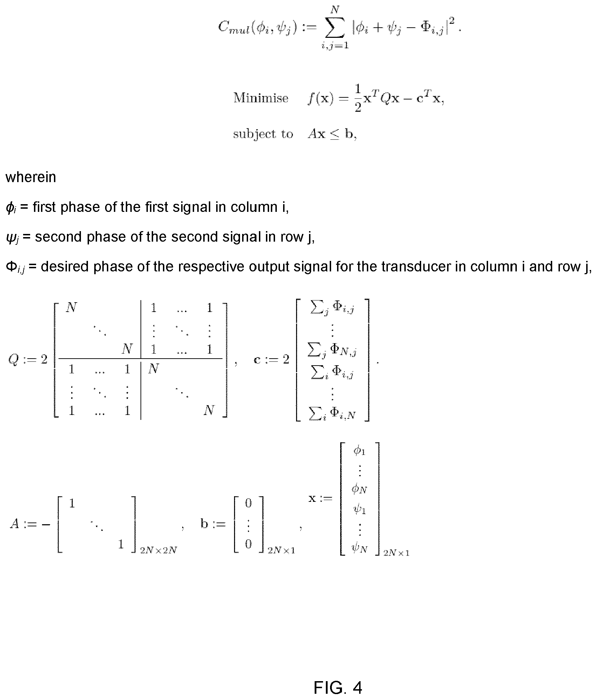

The QP (for the multiplicative mixer implementation) is formulated as shown in Fig. 4. As the Hessian matrix Q is positive semi-definite, it follows that the QP has an infinite number of global minima, i.e., all solutions of this formulation can be considered identical. The solution for vector x then gives the row and column input phases for producing the array phase map that best approximates the target or desired element phases. It is found that the element errors diminish quickly, and converge towards zero when the target focal point is in the far-field. In fact, the solution for the far-field beamformed phase map is almost ideal.

## Advantages

The solution described above may represent a significant advancement in (simple) phased array beamforming applicable to multiple domains. Traditional approaches to phased array driving involve either active fully connected arrays or passively connected arrays. Here, a somewhat hybrid solution is proposed, in which the driving signals are controlled externally, as with a passive array, but has active driving electronics for each element. This is made possible by taking advantage of the mixer behaviour, in which the output phases can be controlled by the relative differences in the input phases.

As shown herein, this approach may be applied in general for beamforming of phased array outputs in both the near-field and far-field, thus allowing for the generation of focal points, an ability required for practical application of phased arrays in various domains, e.g., ultrasound MEMS arrays for mid-air vibrohaptics and biomedical imaging. In a minimal implementation of certain embodiments described herein, only analog electronic components may be required. Additionally, in embodiments the phase array may be curved, as long as the convexity is positive, i.e. concave in one or both axes. This arises from the fact that the phase generation as described herein works as long as the polynomial order of the desired phase map is less than 2 (quadratic).

Possible applications

Medical ultrasound: commonly used operating frequencies for the transducers may be in a range of 2 MHz - 15 MHz as this range provides a good tradeoff between focal spatial resolution and acoustic attenuation of the signal. Possible applications in this field include:

- 2D beamforming allowing for rapid volumetric ultrasound imaging without the use of synthetic aperture RCA arrays of ultrasound MEMS;
- flexible medical ultrasound patches can be controlled using the method of this disclosure as the phase determination routine is viable for arrays displaying positive convexity.

NDT ultrasound: transducer operating frequencies may typically range from 400 kHz to 25 MHz. Same as above, lower frequencies attenuate less but have poor spatial resolution due to the large focal spot diffraction size, whereas higher frequencies can resolve small defects in the material, speed of sound is generally faster e.g. metals. Possible applications in this field include:

- complex beamforming methods to interrogate any defects in solid structures;
- ultrasound patches for use in aerofoils for dynamic realtime monitoring for the onset of fractures and mechanical failure.

Airborne ultrasound: transducer operating frequencies may range from 40 kHz to 1 MHz. Possible applications in this field include:

- elicitation of non-contact haptic sensation in air is possible via the modulation of high pressure focal points in air. Current implementations use fully connected bulk transducer arrays. However, any practical future implementation would likely use high density fill factor MEMS arrays, in which the methods of the present disclosure may be implemented.
- phased array time-of-flight sensors for automotive and robotic applications.
- parametric speakers using ultrasound arrays.

EM/RF phased arrays: possible frequencies are basically the whole spectrum. As the wavelength of EM radiation is typically small compared to the application working distances, the frequency is basically the whole spectrum subject to the target application. Possible applications in this field include:

- control of the far-field beam-steering of very high density phased antenna arrays. In embodiments disclosed herein, half the nominal frequency is used as inputs to the array, which may result in greater power efficiency, and easier control for very large high density arrays, e.g. RF THz arrays.
- Wireless energy transfer: Simple EM, RF, optical, and acoustic phase arrays may be devised to direct and or focus output for energy transfer. For example, wireless charging of electronics, or in-situ powering of implantable bioelectronics.
- Metasurfaces: The control of the phasing output of metasurfaces in various domains can be achieved through the methods disclosed herein. E.g. RF reflectarrays placed in urban settings to re-direct signals for maximal signal power.

Experimental results

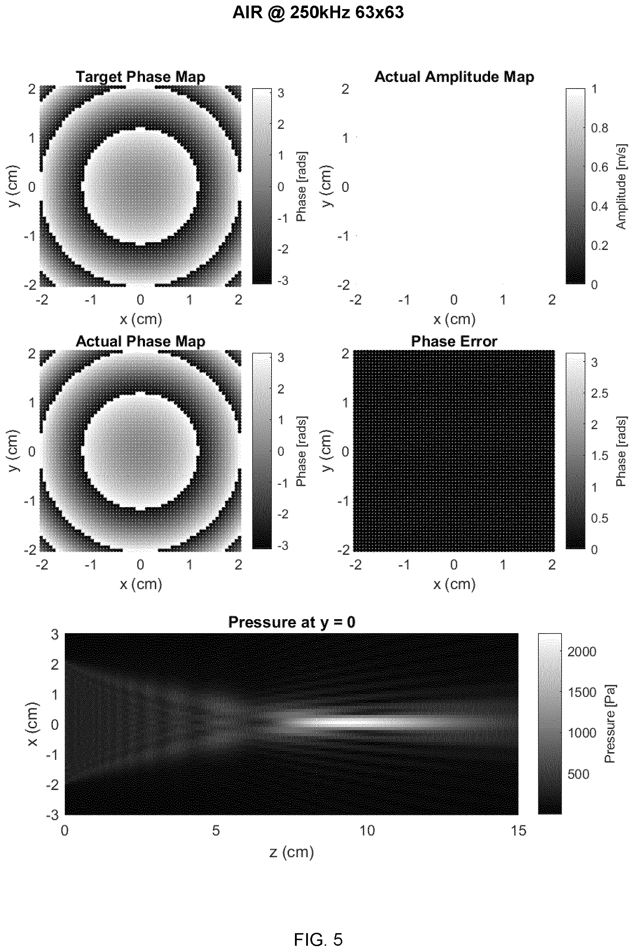

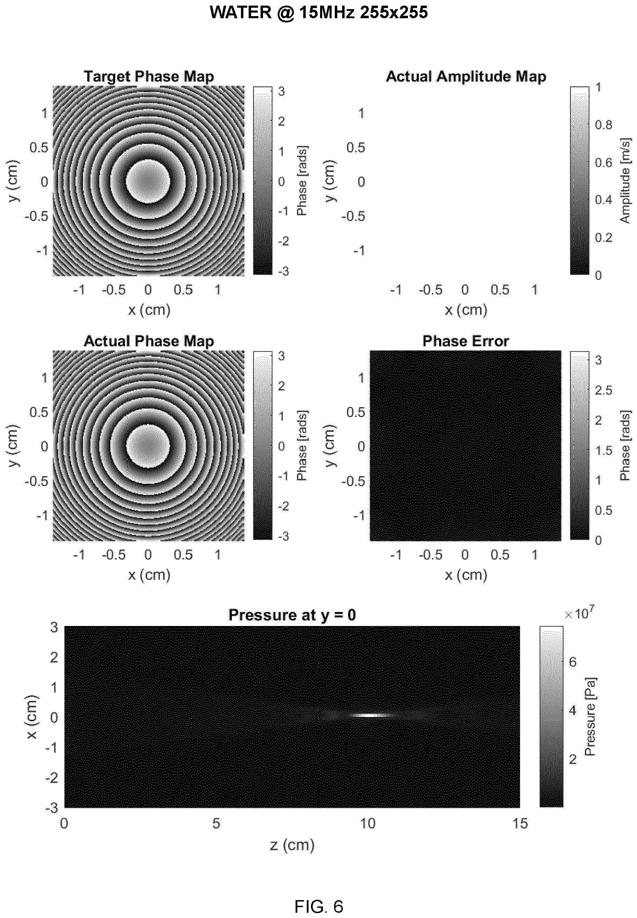

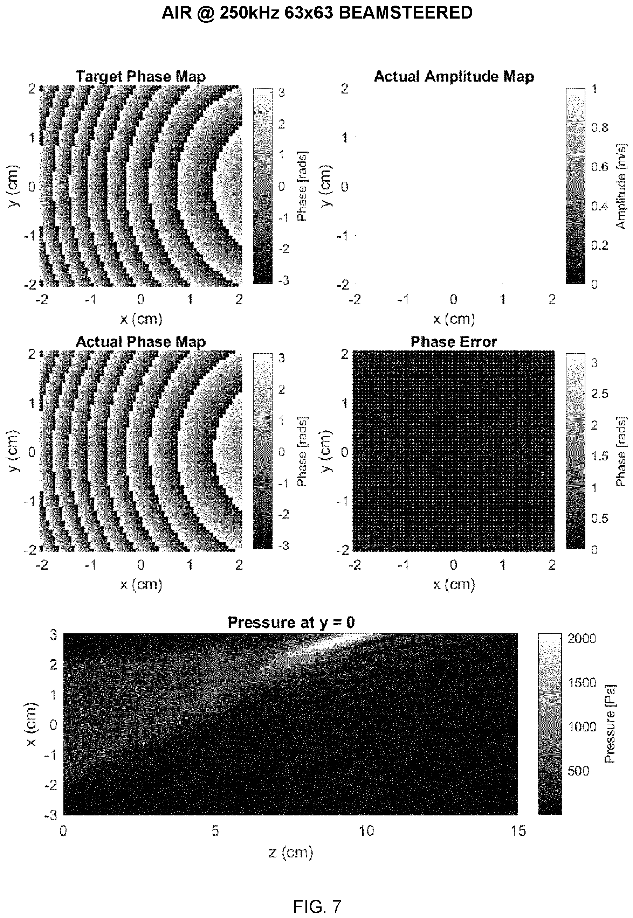

Figs. 5 to 8 show results of acoustic field simulations that were performed in MATLAB using the FOCUS simulator tool from Michigan State University, available at https://www.egr.msu.edu/-fultras-webl. These simulations are performed by assuming the multiplying mixer is ideal. The target phase map is created from the phase delay required to produce a focus. In particular, the array element/pixel phase and amplitudes were calculated using a MATLAB script to determine the ideal output of the mixer at the junction of each row-column. The QP algorithm is applied to obtain the row-column phases. The actual phase map is created from the output of the mixer at each element/pixel.

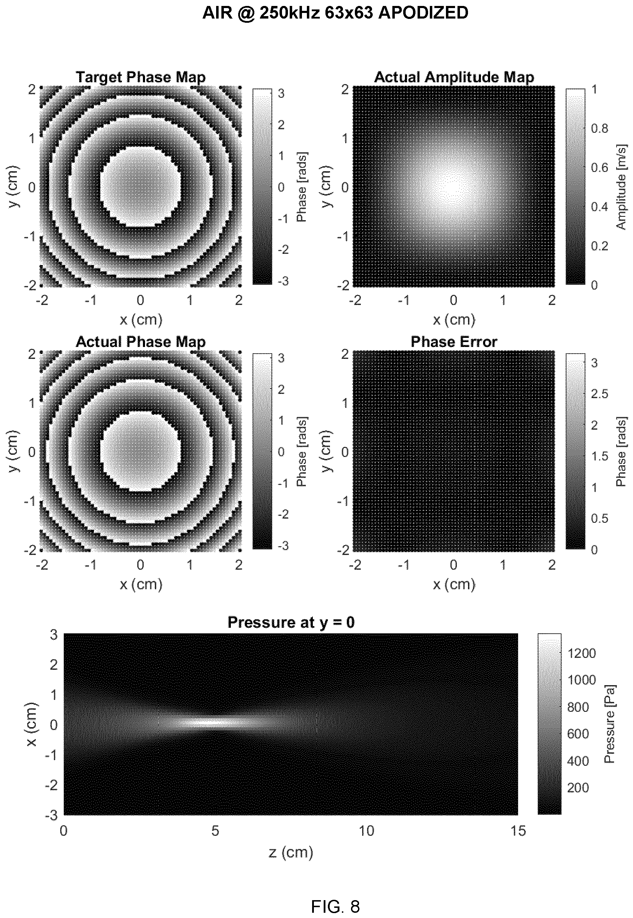

In these figures, each time the target phase map is compared with the actual phase map that can be generated with methods according to the present disclosure. As shown, the actual phase map is very close to the target phase map and the phase error approaches zero. In Fig. 8, the matrix is apodized to suppress the transducers outside a central area of the array and avoid undesired components in the transmit beam. This is clear from the amplitude map.

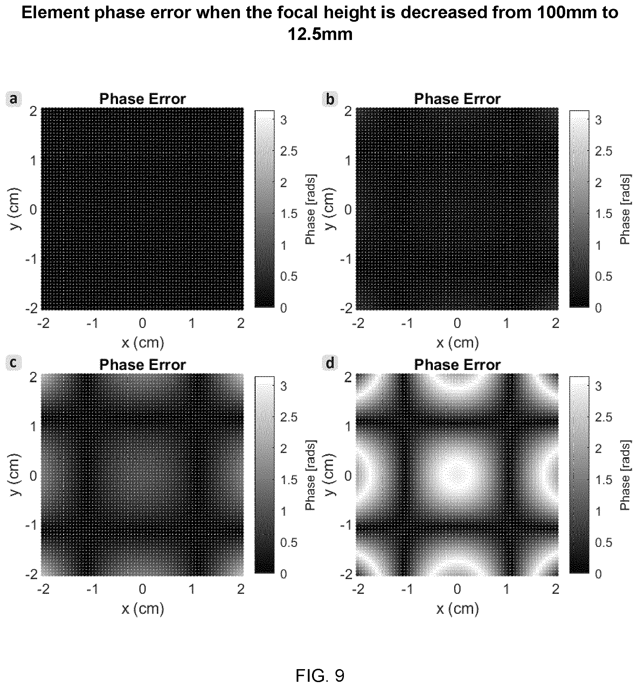

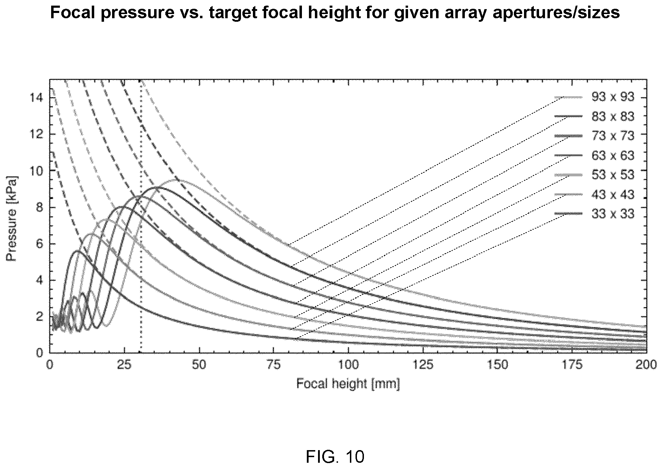

In Fig. 9 and 10 it is shown how the phase error may increase when the focal height is decreased. Unwanted components in the transmit beam may be used to compensate for the increasing phase error, for example aperture masking, sub-array division and the like.

Further embodiments

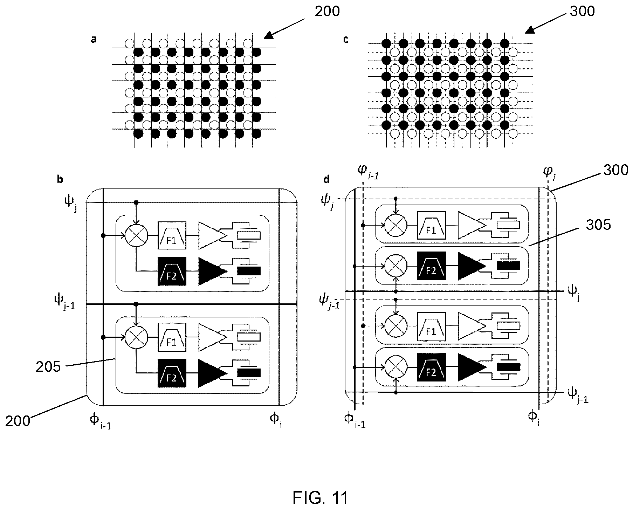

Fig. 11 shows further embodiments according to the present disclosure comprising a multifrequency array wherein each cell of the array contains a first transducer and a second transducer, for example for obtaining a transmit beam based on $(cos(\omega_{r0}t + \alpha) + cos(\omega_{r1}t + \beta))$ and $(cos(\omega_{c0}t + \gamma) + cos(\omega_{c1}t + \delta))$.

In the architecture on the left (FIG. 13 a and b) each cell of the array comprises a shared mixer with two outputs to the transducers, each with a different bandpass filter. In the architecture on the right (FIG. 13 c and d) each cell of the array comprises fully separated mixer + bandpass filter + transducer chains, i.e. each transducer has an independent mixer.

As with the other embodiments disclosed herein, the filters are optional. The device itself can also provide the filtering, for example, devices with high-Q or small bandwidth resonances.

In this way, devices that have multiple independent intercalated grids may be obtained.

**Claims**

1. A phased array beamforming method for forming a transmit beam at a predetermined frequency, F, and focusing the transmit beam in the near field by means of an array of transducers arranged in rows and columns, wherein at least a set of the transducers are continuously driven for forming said transmit beam, the method comprising:

   applying first signals ($d_i$) to first nodes of the columns of the driven set of transducers, the first signals having a first frequency, f1 ($\omega_\phi$), and being at a first phase shift ($\phi_i$) with respect to each other,
   applying second signals ($s_j$) to second nodes of the rows of the driven set of transducers, the second signals having a second frequency, f2 ($\omega_\psi$), and being at a second phase shift ($\psi_j$) with respect to each other, and
   generating an output signal for each of the driven set of transducers based on a multiplication of the respective first and second signals of the corresponding column and row, wherein the first and second frequencies are fractions, a and b, of the predetermined frequency F, and wherein the fractions a and b are defined by

$$f1 = a * F$$

$$f2 = b * F$$

$$a + b = 1$$

   such that the output signal is at the predetermined frequency F as a result of the multiplication.

2. The phased array beamforming method according to claim 1, wherein f1 = f2 = F/2.

3. The phased array beamforming method according to claim 2, wherein the first and second phase shifts are determined by convex optimization, preferably by quadratic programming, preferably wherein the quadratic programming is formulated as

$$C_{mul}(\phi_i, \psi_j) := \sum_{i,j=1}^{N} |\phi_i + \psi_j - \Phi_{i,j}|^2.$$

$$\text{Minimise} \quad f(\mathbf{x}) = \frac{1}{2}\mathbf{x}^T Q \mathbf{x} - \mathbf{c}^T \mathbf{x},$$

$$\text{subject to} \quad A\mathbf{x} \le \mathbf{b},$$

wherein

$\phi_i$ = first phase of the first signal in column i,

$\psi_j$ = second phase of the second signal in row j,

$\Phi_{i,j}$ = desired phase of the respective output signal for the transducer in column i and row j,

$$Q := 2 \begin{bmatrix} N & & & 1 & \cdots & 1 \\ & \ddots & & \vdots & \ddots & \vdots \\ & & N & 1 & \cdots & 1 \\ \hline 1 & \cdots & 1 & N & & \\ \vdots & \ddots & \vdots & & \ddots & \\ 1 & \cdots & 1 & & & N \end{bmatrix}, \quad \mathbf{c} := 2 \begin{bmatrix} \sum_j \Phi_{i,j} \\ \vdots \\ \sum_j \Phi_{N,j} \\ \sum_i \Phi_{i,j} \\ \vdots \\ \sum_i \Phi_{i,N} \end{bmatrix}.$$

$$A := - \begin{bmatrix} 1 & & \\ & \ddots & \\ & & 1 \end{bmatrix}_{2N \times 2N}, \quad \mathbf{b} := \begin{bmatrix} 0 \\ \vdots \\ 0 \end{bmatrix}_{2N \times 1}, \quad \mathbf{x} := \begin{bmatrix} \phi_1 \\ \vdots \\ \phi_N \\ \psi_1 \\ \vdots \\ \psi_N \end{bmatrix}_{2N \times 1}$$

4. The phased array beamforming method according to any preceding claim, wherein the output signal is filtered to remove undesired frequency lobes and/or wherein at least some transducers of the array are not driven, so as to suppress undesired components of the transmit beam.

5. The phased array beamforming method according to any preceding claim, wherein the array is planar, or wherein the array is concave.

6. The phased array beamforming method according to any preceding claim, wherein the transmit beam is an acoustic beam or an electromagnetic beam.

7. A phased array beamsteering method, wherein a transmit beam is formed by the beamforming method of any preceding claim and wherein the transmit beam is steered by modifying the first and/or second phase shifts.

8. A device comprising a phased array (100) for emitting a transmit beam at a predetermined frequency, F, and focusing the transmit beam in the near field, wherein the phased array comprises an array of transducers (110) arranged in rows and columns and circuitry for continuously driving at least a set of the transducers according to a phased array beamforming method, the circuitry comprising:

first components (101) for applying first signals ($d_i$) to first nodes of the columns of the driven set of transducers, the first signals having a first frequency, f1 ($\omega_\phi$), and being at a first phase shift ($\phi_i$) with respect to each other, second components (102) for applying second signals ($s_j$) to second nodes of the rows of the driven set of transducers, the second signals having a second frequency, f2 ($\omega_\psi$), and being at a second phase shift ($\psi_j$) with respect to each other, and
multiplying mixers (107) for generating an output signal for each of the driven set of transducers based on a multiplication of the respective first and second signals of the corresponding column and row, wherein the first and second frequencies are fractions, a and b, of the predetermined frequency F of the transmit beam and wherein the fractions a and b are defined by

$$f1 = a * F$$

$$f2 = b * F$$

$$a + b = 1$$

such that the output signals are at the predetermined frequency as a result of the multiplication.

9. The device according to claim 8, wherein f1 = f2 = F/2.

10. The device according to claim 9, wherein the first and second components are provided for determining the first and second phase shifts by convex optimization, preferably by quadratic programming, preferably wherein the quadratic programming is formulated as

$$C_{mul}(\phi_i, \psi_j) := \sum_{i,j=1}^{N} |\phi_i + \psi_j - \Phi_{i,j}|^2.$$

$$\text{Minimise} \quad f(\mathbf{x}) = \frac{1}{2}\mathbf{x}^T Q \mathbf{x} - \mathbf{c}^T \mathbf{x},$$

$$\text{subject to} \quad A\mathbf{x} \leq \mathbf{b},$$

wherein

$\phi_i$ = first phase of the first signal in column i,
$\psi_j$ = second phase of the second signal in row j,
$\Phi_{i,j}$ = desired phase of the respective output signal for the transducer in column i and row j,

$$Q := 2\left[\begin{array}{ccc|ccc} N & & & 1 & \cdots & 1 \\ & \ddots & & \vdots & \ddots & \vdots \\ & & N & 1 & \cdots & 1 \\ \hline 1 & \cdots & 1 & N & & \\ \vdots & \ddots & \vdots & & \ddots & \\ 1 & \cdots & 1 & & & N \end{array}\right], \quad \mathbf{c} := 2\left[\begin{array}{c} \sum_j \Phi_{i,j} \\ \vdots \\ \sum_j \Phi_{N,j} \\ \sum_i \Phi_{i,j} \\ \vdots \\ \sum_i \Phi_{i,N} \end{array}\right].$$

$$A := -\left[\begin{array}{ccc} 1 & & \\ & \ddots & \\ & & 1 \end{array}\right]_{2N \times 2N}, \quad \mathbf{b} := \left[\begin{array}{c} 0 \\ \vdots \\ 0 \end{array}\right]_{2N \times 1}, \quad \mathbf{x} := \left[\begin{array}{c} \phi_1 \\ \vdots \\ \phi_N \\ \psi_1 \\ \vdots \\ \psi_N \end{array}\right]_{2N \times 1}$$

11. The device according to any of the claims 8-10, wherein the circuitry comprises filters (108) for filtering the output signals and removing undesired frequency lobes and/or wherein the circuitry (101, 102) is provided for selectively driving the transducers such that at least some transducers the array can be not driven to suppress undesired components of the transmit beam.

12. The device according to any of the claims 8-11, wherein the array (100) is planar, or wherein the array is concave.

13. The device according to any of the claims 8-12, wherein the transmit beam is an acoustic beam or an electromagnetic beam.

14. The device according to any of the claims 8-13, wherein the circuitry (101, 102) is provided for steering the transmit beam by modifying the first and/or second phase shifts.

15. The device according to any of the claims 8-14, wherein the array (200; 300) is a multifrequency array, wherein each cell (205; 305) of the array comprises a first transducer for emitting a first transmit beam component at a first operating frequency and a second transducer for emitting a second transmit beam component at a second operating frequency.

FIG. 1

FIG. 2

FIG. 3

$$C_{mul}(\phi_i, \psi_j) := \sum_{i,j=1}^{N} |\phi_i + \psi_j - \Phi_{i,j}|^2 .$$

$$\text{Minimise} \quad f(\mathbf{x}) = \frac{1}{2}\mathbf{x}^T Q \mathbf{x} - \mathbf{c}^T \mathbf{x},$$

$$\text{subject to} \quad A\mathbf{x} \leq \mathbf{b},$$

wherein

$\phi_i$ = first phase of the first signal in column i,

$\psi_j$ = second phase of the second signal in row j,

$\Phi_{i,j}$ = desired phase of the respective output signal for the transducer in column i and row j,

$$Q := 2 \left[ \begin{array}{ccc|ccc} N & & & 1 & \cdots & 1 \\ & \ddots & & \vdots & \ddots & \vdots \\ & & N & 1 & \cdots & 1 \\ \hline 1 & \cdots & 1 & N & & \\ \vdots & \ddots & \vdots & & \ddots & \\ 1 & \cdots & 1 & & & N \end{array} \right], \quad \mathbf{c} := 2 \left[ \begin{array}{c} \sum_j \Phi_{i,j} \\ \vdots \\ \sum_j \Phi_{N,j} \\ \sum_i \Phi_{i,j} \\ \vdots \\ \sum_i \Phi_{i,N} \end{array} \right].$$

$$A := - \left[ \begin{array}{ccc} 1 & & \\ & \ddots & \\ & & 1 \end{array} \right]_{2N \times 2N}, \quad \mathbf{b} := \left[ \begin{array}{c} 0 \\ \vdots \\ 0 \end{array} \right]_{2N \times 1}, \quad \mathbf{x} := \left[ \begin{array}{c} \phi_1 \\ \vdots \\ \phi_N \\ \psi_1 \\ \vdots \\ \psi_N \end{array} \right]_{2N \times 1}$$

FIG. 4

## AIR @ 250kHz 63x63

FIG. 5

## WATER @ 15MHz 255x255

FIG. 6

**AIR @ 250kHz 63x63 BEAMSTEERED**

FIG. 7

## AIR @ 250kHz 63x63 APODIZED

FIG. 8

**Element phase error when the focal height is decreased from 100mm to 12.5mm**

FIG. 9

**Focal pressure vs. target focal height for given array apertures/sizes**

FIG. 10

FIG. 11

**Phased array beamforming**

**10**

Provide phased array with transducer cells arranged in rows and columns; each cell has multiplying mixer, (possibly) filter and/or amplifier, transducer

**11**

Determine phase shifts by quadratic programming

**12**

Generate first signals (freq. f1 & phase shifted); apply first signals to first nodes (columns)

**13**

Generate second signals (freq. f2 & phase shifted); apply second signals to second nodes (columns)

**14**

Multiply first and second signals using mixers; obtain multiplied signals at freq. F = f1 + f2

**15**

(Possibly) filter & amplify multiplied signals to obtain output signals

**16**

Apply output signals to transducers

FIG. 12

Europäisches
Patentamt
European
Patent Office
Office européen
des brevets

# EUROPEAN SEARCH REPORT

**Application Number**

EP 24 18 8590

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 4 187 718 A1 (PROVIZIO LTD [IE]) 31 May 2023 (2023-05-31) * paragraphs [0001], [0025], [0044], [0050], [0052], [0056], [0062], [0063], [0065], [0067] - [0069], [0072]; figure 8 * ----- | 1-15 | INV. H04B7/06 |

**TECHNICAL FIELDS SEARCHED (IPC)**

H04B
H01Q

The present search report has been drawn up for all claims

| Place of search | Date of completion of the search | Examiner |
|---|---|---|
| Munich | 10 December 2024 | Panahandeh, Ali |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons
..........................................................................................
& : member of the same patent family, corresponding
   document

## ANNEX TO THE EUROPEAN SEARCH REPORT
## ON EUROPEAN PATENT APPLICATION NO.

EP 24 18 8590

This annex lists the patent family members relating to the patent documents cited in the above-mentioned European search report.
The members are as contained in the European Patent Office EDP file on
The European Patent Office is in no way liable for these particulars which are merely given for the purpose of information.

10-12-2024

| Patent document cited in search report | Publication date | Patent family member(s) | Publication date |
|---|---|---|---|
| EP 4187718 A1 | 31-05-2023 | EP 4187718 A1<br>EP 4441845 A1<br>US 2024405428 A1<br>WO 2023094132 A1 | 31-05-2023<br>09-10-2024<br>05-12-2024<br>01-06-2023 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **SANCHEZ-BARBETTY, M. ; JACKSON, R. W.** Architecture for Low Cost Electronically Steered Phased Arrays. *IEEE MTT-S International Microwave Symposium Digest*, 2008

- **SANCHEZ-BARBETTY, M.** Low Cost Electronically Steered Phase Arrays for Weather Applications. *Open Access Dissertations*, 2011